Europäisches Patentamt

European Patent Office

Office européen des brevets

(11) Publication number: **0 230 415 B1**

(12) **EUROPEAN PATENT SPECIFICATION**
published in accordance with Art. 158(3) EPC

(45) Date of publication of patent specification: **24.07.91**  (51) Int. Cl.⁵: **G01V 1/157**

(21) Application number: **85905337.3**

(22) Date of filing: **22.10.85**

(86) International application number:
**PCT/IT85/00039**

(87) International publication number:
**WO 86/02739 (09.05.86 86/10)**

The file contains technical information submitted after the application was filed and not included in this specification

(54) **ELECTROACOUSTIC PULSE SOURCE FOR HIGH RESOLUTION SEISMIC PROSPECTINGS.**

(30) Priority: **23.10.84 IT 4912784**

(43) Date of publication of application:
**05.08.87 Bulletin 87/32**

(45) Publication of the grant of the patent:
**24.07.91 Bulletin 91/30**

(84) Designated Contracting States:
**AT BE CH DE FR GB LI LU NL SE**

(56) References cited:
**DE-C- 914 590**
**FR-A- 1 395 127**
**US-A- 2 559 227**
**US-A- 3 356 178**

(73) Proprietor: **CONSIGLIO NAZIONALE DELLE RICERCHE**
**Piazzale Aldo Moro, 7**
**I-00185 Roma(IT)**

(72) Inventor: **CANNELLI, Giovanni, Bosco**
**Via Trevio Littore 5**
**I-00152 Roma(IT)**
Inventor: **D'OTTAVI, Enrico**
**Via Nausen 100**
**I-00154 Roma(IT)**
Inventor: **SANTOBONI, Silvio**
**Via Nomentana 905**
**I-00137 Roma(IT)**

(74) Representative: **Fiammenghi-Domenighetti, Delfina et al**
**Fiammenghi-Fiammenghi Via Quattro Fontane 31**
**I-00184 Roma(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention concerns an electroacoustic pulse source for high-resolution seismic prospectings.

## TECHNICAL FIELD

The device can greatly interest industry owing to the manifold application fields involved. It can have useful exploitation in archaeological explorations where acoustic techniques have not yet met with success up to now. Further, the device can be considered a valid means for location of water tables, inland water contour exploration, study of characteristics and behaviours of soils planned for building up operas such as foundations, tunnels, dams and nuclear power plants.

## BACKGROUND ART

Sources for deep seismic explorations are very expensive and often not suitable for shallow prospectings for which higher resolutions are required. The most common seismic sources are explosive charges, vibrators, and weight-dropping devices. In near-surface prospectings such as the archaeological one, explosives, although of reduced power, had to be excluded because they do not guarantee a "non destructive" exploration and require an expensive handling such as security measures, shothole drilling and so on. Under many aspects seismic vibrators would represent an adequate means, but their cost is too high. The most simple and economic mechanical devices, usually utilized for shallow prospecting, suffer from several shortcomings; the energy supplied by them is lost in most part, like surface waves and shear waves and is limited to lower frequencies, and the shot repetition rate is too low. This latter type of source, already experienced at IDAC (G.B. Cannelli, "Geoacoustic Measurement of P-Wave Velocity by Seismic Refraction Technique", Riv. Ital. di Acustica, 8(1), 39-57, 1984), allows only rough prospectings on land. Devices are already known in which the technique of the "sparker" is employed in order to produce acoustic waves. But up to the date, they have never had any practical realization, as far as the possibility is concerned, to carry out seismic explorations of high resolution and accuracy.

Their characteristics could be improved only with special mechanical and electronic artifices, which should be apt to act on the directivity of the acoustic wave beam and on the spectral content of the seismic waves which are produced. FR-A-1 395 127 and US-A-3 356 178, for instance, are known, which concern apparatus for seismic explorations, each comprising an outer dome-like or bell hollow structure, filled with a liquid and including an electroacoustic transducer. Electrodes are arranged inside the hollow structure and means are provided to generate a spark discharge across the electrodes. Neither of these known apparatus, however, permit to attain a satisfying resolution. In fact the first aforecited French patent provides a structure defining an inner reflecting surface of a semispherical shape and which does not permit to generate any acoustic directive wave beam.

US-A-3 356 178 provides that the inner reflective surface for the seismic waves may be, "indifferently", a dome-like, a semi-spherical, or semi-elliptical, or parabolic, etc. surface. Therefore, the shape of said reflective surface, is not considered critical. Furthermore, no means are provided to obtain a "directive" acoustic wave beam of high resolution, and particularly, no suggestion is given on how to position the electrodes within the hollow structure when a parabolic reflective surface is used.

The above known apparatus cannot generate a beam of "substantially parallel acoustic waves", so that they cannot provide an optimal spatial distribution of the generated acoustic energy and, therefore, a proper directivity of the acoustic waves.

Furthermmore, the apparatus disclosed in the cited US-A 3 356 178 transduces a single prolonged pressure wave, which, as it is well known in the technique, is unusable in prospectings requiring high-resolution in depth.

In fact (see: G.Parker and L.Halton; "The Marine Seismic Source", Reidel Publ.Holland, 1986), it is known that the optimal condition to perform "High Resolution Prospectings", is to have an acoustic pulse, as much as possible, similar to a "spike", approximately by the function of Dirac, i.e. a "very short" pulse in the time domain containing all frequencies.

Furthermore, the apparatus disclosed in the cited patents does not give any possibility of obtaining a frequency spectrum "which can be varied" according to the different operative conditions and permits to operate at different ground depths, in particular, for prospectings of the strata near the earth surface.

## DISCLOSURE OF THE INVENTION

The seismic wave source, according to this invention, mainly aims at improving the resolution in the acoustic prospectings of shallow underground (from some meters to a few hundred meters). Shallow depths are almost completely ignored in mining research prospectings which are interested to depths of the order of thousand meter and over. These latter are considered more remunerative, and on the other hand, do not acquire high resolutions owing to the macroscopic inhomogeneities involved. The seismic wave source according to this invention comprises an electroacoustic transducer including a metal hollow structure defining an inner paraboloid reflective surface, substantially shaped like a bell, closed at the base by an elastic diaphragm and filled with a liquid having an high electric resistivity and a relatively low dielectric strength, two main electrodes, supported by adjusting means, are set adjacent to the focus of the paraboloid and an auxiliary electrode is put between the main electrodes; a set of capacitors supplied by a high-voltage power supply, and electrically connected to the main electrodes; a trigger pulse generator electrically connected to one of the main electrodes and to the auxiliary electrode; a synchronization pulse generator, which controls the trigger pulse generator and generates the electric pulses necessary to pilot a seismograph and a control oscilloscope; and a remote control to drive the synchronism signals by means of a manual operated pushbutton.

In order to generate a seismic wave by means of the source of this invention, a high voltage discharge is primed between the main electrodes. The produced acoustic pulse is transmitted via the liquid medium to the soil on which the base of the transducer is fixed through the diaphragm that assures the seal of the liquid inside the transducer as as not to cause the contact with the earth surface.

The main advantages of the invention consist in the fact that it carries out a seismic source of "nondestructive" type and that it produces P-waves (parallel waves) with such frequency characteristics, directivity patterns and energy, that it allows a good resolution of underground inhomogeneities from a depth of some meters to about 100 m. In particular, in the amplitude spectrum of the acoustic pulse produced by the source of this invention, the presence of an appreciable contribution may be observed to frequencies up to some kHz considered more suitable for shallow prospectings. Moreover, the seismic wave generated by the parabolic transducer has a greater energy concentration in P-waves (the most used waves in the seismic prospecting), in comparison with that of a mechanical source having the same energy.

The possibility of electrically varying the source value allows to control, to a certain extent, the pulse shape, its duration and repetition rate. So, lower frequencies can be utilized to explore anomalies to a great depth and higher frequencies to resolve small subsurface inhomogeneities. Moreover, in regard to the high-voltage discharge primer, this is accomplished in such a way that possible losses of the available electrostatic energy are minimized. In fact, the energy supplied to the auxiliary electrode, in order to modify the ionization state of the liquid medium, is not subtracted from the electrostatic energy required to generate the seismic wave.

BRIEF DESCRIPTION OF THE DRAWINGS

These and other advantages and features of the invention will be more evident from the following description of an embodiment together with the enclosed drawings in which:

Fig. 1 is a diagrammatic view of a seismic wave source according to the present invention;

Fig. 2 is a partially sectioned vertical view, of a parabolic transducer of the invention;

Fig. 3 is an enlarged axial section of the transducer head of Fig. 2;

Fig. 4 is a schematic electric diagram of an high-voltage power (HT) generator utilized in the embodiment of the invention;

Fig. 5 is an interconnection scheme between the set of capacitors and a high-voltage rectifier both utilized together with the H.T. generator of Fig. 4;

Fig. 6 is a schematic electric diagram of a trigger pulse generator, a (E.H.T.) generator with pertinent trigger circuits utilized in the embodiment of the invention;

Fig. 7 is a schematic block diagram showing the electrical connections among different parts of the seismic source according to this invention;

Fig. 8 reproduces an oscilloscope picture of the acoustic pulse produced by the parabolic transducer and detected on the axis of symmetry Z-Z at a distance z = 100 cm from the base plane; the voltage V (scale 1V/div) is given on ordinate axis and the time t (scale 100 $\mu$ s/div) on abscissa axis;

Fig. 9 is a diagram showing the experimental acoustic pressure distribution in air, for the empty paraboloid; the pressure being revealed along some different planes at right angles with respect to the axis of symmetry Z-Z of the paraboloid; the acoustic pressure p in kPa is given on ordinate axis, and the distance x measured in cm on the planes at right angle to the Z-Z axis is given on abscissa axis. The figures shown have, as parameter, the distances z measured on Z-Z axis from the paraboloid base.

Fig. 10 is a diagram showing the amplitude spectrum of the acoustic pulse of Fig. 8, with dB on ordinate axis and kHz on abscissa axis;

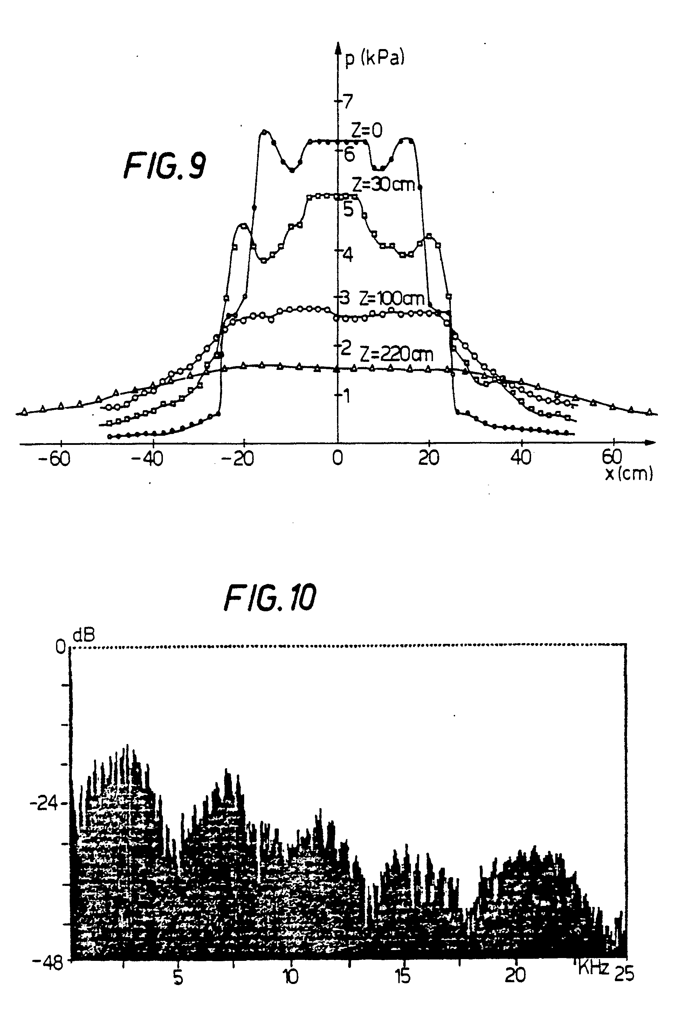

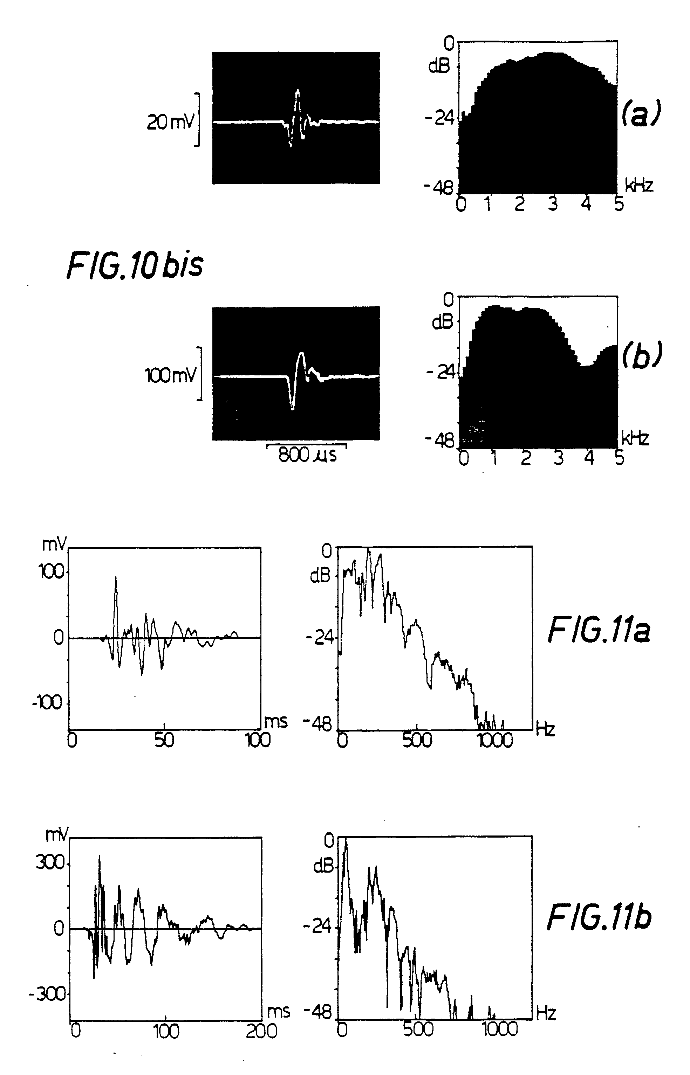

Fig. 10 bis shows in comparative way two diagrams corresponding to the power-spectra of the acoustic pulses in air for two different elec-trical capacitances $C_o$

(a) :     $C_o = 40 \mu$ F.

(b) :     $C_o = 360 \mu$ F

Fig. 11a shows acoustic pulses signatures of the parabolic source detected at a depth of 2 m in wheatered soil and their respective amplitude spectra for the capacitance $C_o = 40 \mu F$.

Fig. 11b shows acoustic signatures of the parabolic source detected at a depth of 2 m in wheatered soil and their respective amplitude spectra, for the capacitance of $C_o = 360 \mu F$.

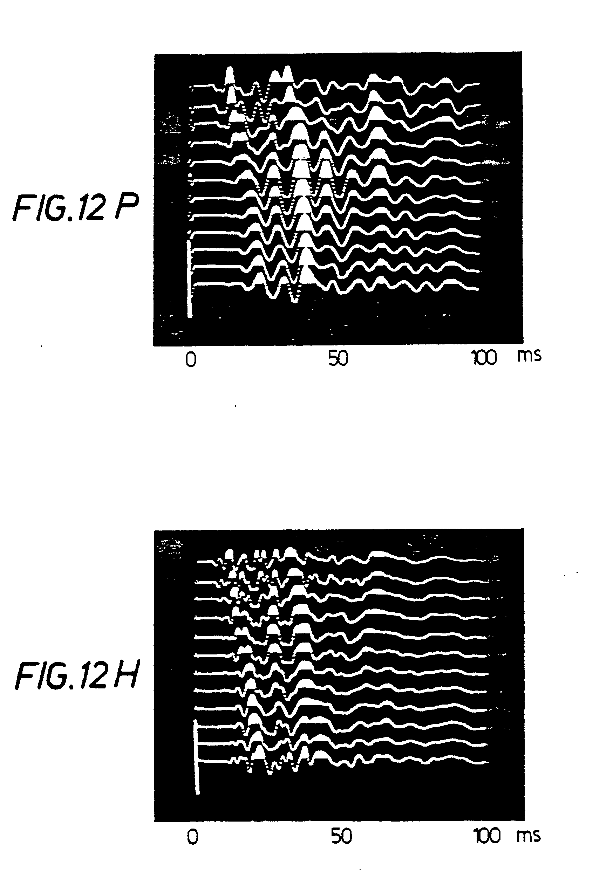

Figs. 12P and 12H are, for the sake of comparison, the seismograms corresponding to the electroacoustic source P according to this invention, and those generated by a mechanical source H, respectively.

BEST MODE OF CARRYING OUT THE INVENTION

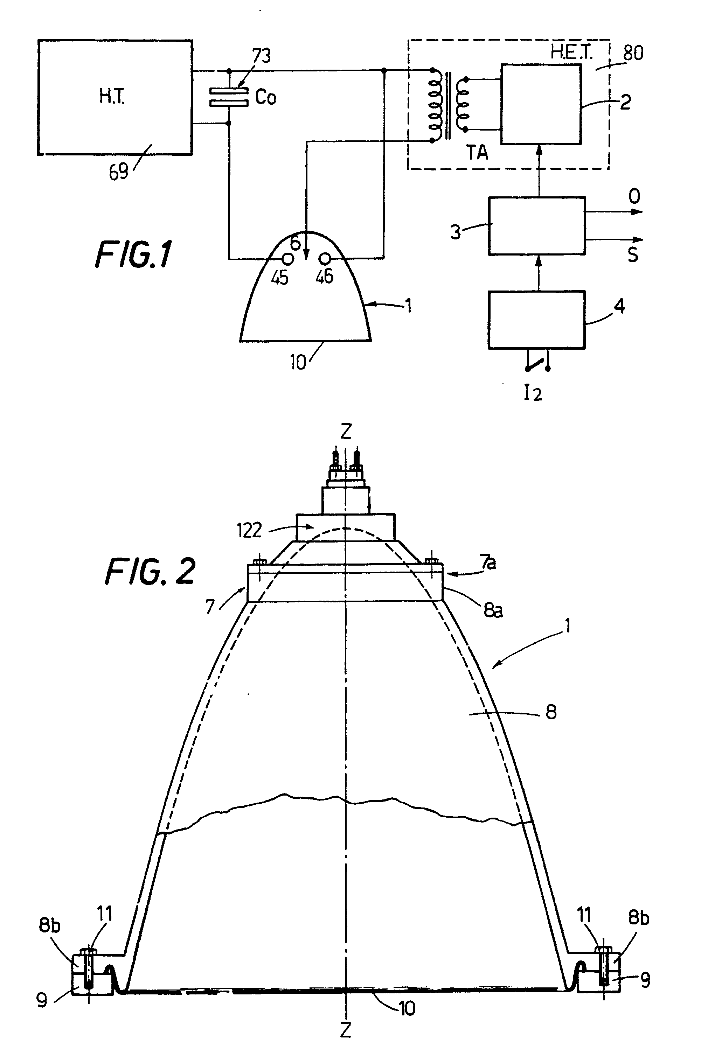

With reference to Fig. 1 where the main components of the seismic wave source are diagrammatically represented, number 1 is an electroacoustic transducer, 69 is a high-voltage power generator (H.T.), 73 is a capacitor set $C_o$, the dotted block 80 represents a driving trigger pulse generator (E.H.T.) with its firing circuits 2 and a transformer TA; 3 is a synchronism signal generator block, 4 is a remote control panel controlled by a manual pushbutton $I_2$. The electroacoustic transducer 1 has a metallic structure having an inner reflective surface shaped like a round paraboloid having an axis of symmetry Z-Z and open at its base and closed by means of an elastic diaphragm 10 which will be described in detail later on. In its inside, which is filled with an insulating liquid with high electrical resistivity and not very high dielectric strenght, such as vaseline oil, two main electrodes 45 and 46 are set and an auxiliary electrode 6 is put between the first ones.

The H.T. generator 69 charges the set of capacitors 79 capacitance ($C_o = 360 \mu F$) at about 2500 V. The corresponding value of the electrostatic energy stored in the capacitors 73 is about 1.1 kJ. The armatures of the capacitors 73 are connected to two tungsten electrodes 45 and 46. The lack of medium ionization does not allow, in normal conditions, an electric discharge in the 3 mm gap of the electrodes 45, 46. The discharge starts only when a difference of potential of 150 kV, applied between the auxiliary electrode 6 and the electrode 46, for instance, produces a preliminary low energy spark, capable to ionize the liquid. Then the set of capacitors 73 can discharge its energy, producing a high intensity spark between the electrodes 45 and 46 and consequently an acoustic impulse in the liquid medium. After the discharge process, the H.T. generator 69 produces a new charge of the capacitor set 73 and all the cycle can start again.

The firing electric impulse (150 kV) is produced by the (E.H.T.) generator 80. The primary coil of the transformer TA is excited by a 400 V tension, controlled by the trigger circuits of block 2. The trigger pulse generator 3 produces the electric pulses necessary to drive a seismograph and an oscilloscope (or another control instrument), these latter being indicated in the figure simply by an arrow S and an arrow O. The trigger circuit 2 is driven manually by a pushbutton $I_2$ in the console 4.

A more detailed description of all the components of the seismic source follows.

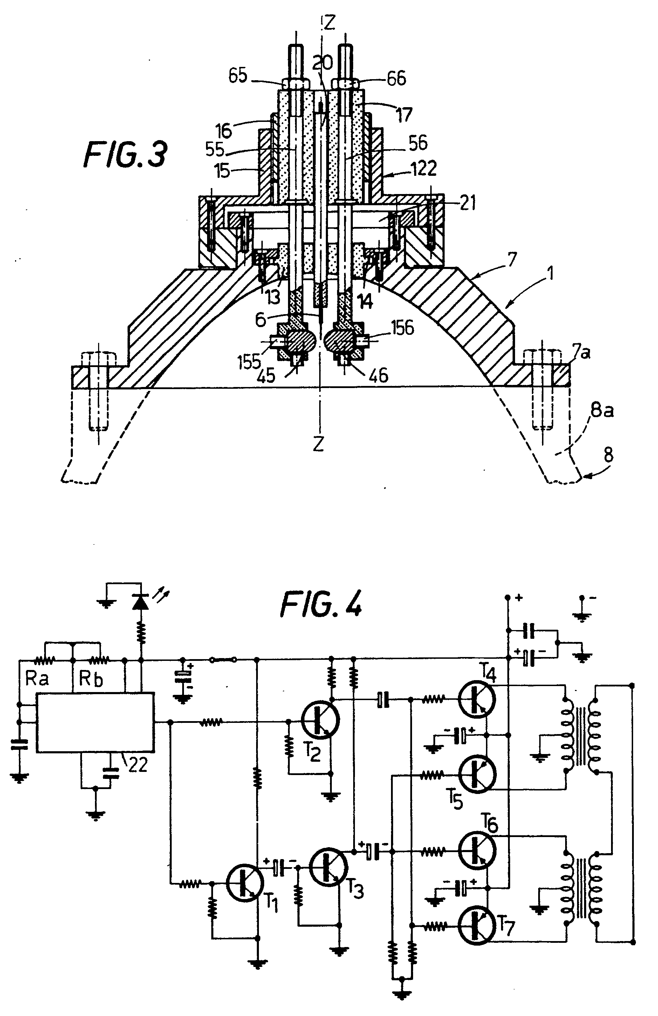

The mechanical part of the transducer is a parabolic reflector of alluminium alloy (e.g. anticorodal), manufactured by means of the lost-wax casting techique. The thickness of the walls is about 1 cm. As shown in the Figures 2 and 3 the transducer 1 is made up of three principal parts: a head 7, housing the electrodes leaning inside the paraboloidic surface, a body 8, and a locking ring 9, which tights an elastic diaphragm 10 at the end of the base of the paraboloidic structure. The body 8 has an upper part 8a, connected with the flange 7a of the head 7, and below an outer 8b to join the locking ring 9 by means of the screws 11. The flange 8b has a groove on its circumference, which holds both the peripheric edge of the diaphragm 10, and a peripheric protrusion on the locking ring 9 facing the corresponding groove so that the diaphragm edge could remain locked between the groove and the protrusion. So the diaphragm 10, which can be neoprene-made, results in turn well tightened. The coupling of the head 7 to the body 8 between the flanges 7a and 8a is obtained simply by bolts and an O-ring, so that an easy separation of the head 7 from the body 8 is allowed, for a quick setting of the electrodes 45, 46, 6 or a complete replacement of the head 7, if required. The head 7 of the paraboloidic surface, which has a hole at its top, is surmonted by a dome or cat 122 (Fig. 3), which serves to support and adjust the electrodes 45, 46, 6. In particular, the hole of head 7 is closed by a substantially cylindrical item 13 with convex base, of insulating material, like nylon, drilled for the passage of the rests 55, 56, 20 of the three electrodes 45, 46, 6, and provided on its circumference with protrusions, by which it is locked to the head 7 through a ring nut 14, fixed to the head 7 by screws. In a similar movable manner, on the head 7 is mounted a coupling item 15 threaded inside for holding a counter-threaded sleeve 16, at the inside of which is inserted, with forced coupling, a cylindrical nylon-item 17 coaxial with the item 13 and suitably drilled. The rests 55 and 56 of the electrodes 45 and 46 are copper tubular supporting rods passing through the cylindrical items 13 and 17. They are fixed to the cylindrical item 17, and then to the sleeve 16, by the nuts 19a and 19b, screwed on the respective threaded upper ends thereof. The main electrodes 45 and 46 are mounted adjustable on the lower ends of the rests 55 and 56, in facing relationship. Between them the auxiliary electrode 6 is placed, mounted on the lower end of the nylon-rest 20 passing through the cylindrical items 13 and 17.

It is a matter, of course, that by means of that arrangement the electric insulation requirements are met and meanwhile the electric conductivity of the electrodes, which are tungsten made. Moreover the above described apparatus for supporting the electrodes 45, 46, 6 and for setting their position is made so that little movements of the electrode barycentre are allowed both along the axis Z-Z of the paraboloid within a range of ± 15 mm max. with respect to the focal point simply by wheeling the coupling item 15, and in a perpendicular direction for setting the gap between the two electrodes owing to adjustable supporting means 155 and 156 of the electrodes 45, 46. Such a mechanism affords, for suitable ratio of base-diameter to the wave-lenght the possibility of modifying, to a certain extent, the beam-width of the source by inching down or up the electrodes with reference to the focus.

The cylindrical items 13 and 17 are crossed by two holes, not visible in the Fig. 3, which allow a breather of the combustion gas-bubble from the paraboloid and a partial damping of the pressure impulse on the liquid, with the production of a liquid flow through the flow-off chamber 21. Moreover the holes allow an easy vent of the air during filling up the paraboloid with liquid.

In the field operation, the paraboloidic chamber is put on a proper digging up filled with liquid and it is loaded by suitable lead rings in order to fix it on the soil and prevent bobbing. The same result can be obtained by applying on the source an hydraulic jack anchored to a vehicle which constitutes the mobile lab. As regards to the electroacoustic transducer device 1 in its complex, it was designed so as to obtain a sufficient directivity of the acoustic wave for frequency values in the range of kHz, with the barycentre of the electrodes 45, 46 on the focus of the paraboloidic reflective surface. The base size has the maximum influence on the directivity at lowest frequencies. Therefore the design of the paraboloidic surface was a compromise between the need of a reasonable large base-dimension to limit an excessive acoustic beam-divergence and that of an enough small dimension to allow an easy manual transport of the apparatus in the field. So, as a first step the following dimensions were fixed: focal lenght = 3 cm; inside base-diameter = 50 cm; height = 52.1 cm.

In the Fig. 4 is shown the schematic diagram of the high voltage generator H.T. 69. A power inverter is used in this circuit to obtain the high voltage from a low voltage supplied by an accumulator battery (12 V, 60 A/h). The battery supply was choosen for two main reasons:

a) the apparatus at issue must operate outdoors also in places where the electrical distribution network is not available;

b) the use of high voltage is safer for the operator if there is no connection with the ground of the electrical distribution network.

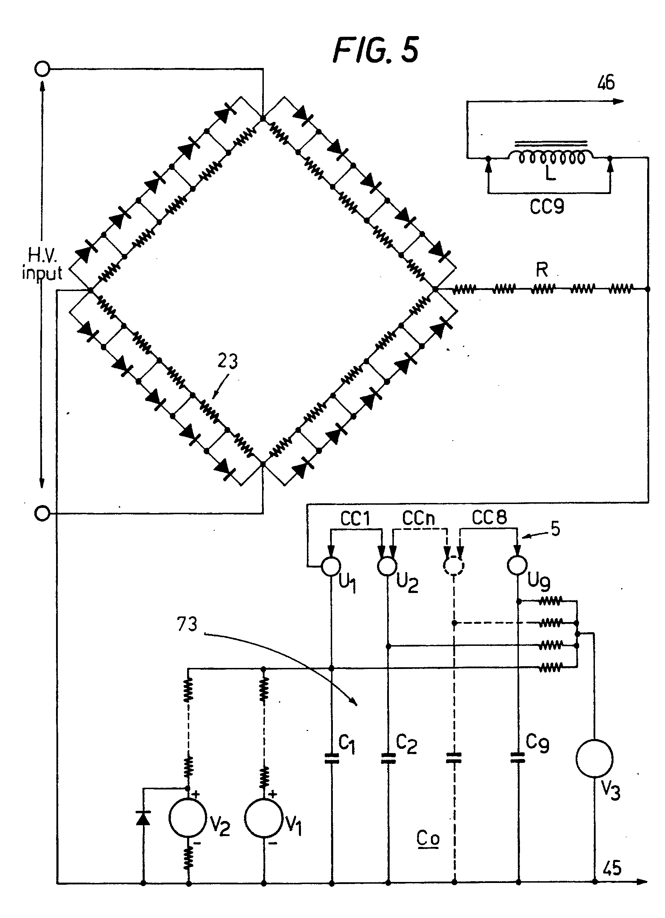

The inverter is made in no self-oscillating configuration, in order to vary easily the frequency of operation. Therefore an integrated circuit NE 555 block 22 was employed to produce a square wave of variable frequency in the range 100 Hz - 25 kHz, by setting two resistive trimmers Ra and Rb. The transistor T1 inverts the phase of the signal produced by the oscillator, in order to drive the final power-darlington T4, T5, T6, T7 through two decoupling-transistors T2 and T3, capable to deliver the required driving current. Two push-pull final stages are employed, connected to two separate output transformers, with their secondary coils in series, in order to reach the required voltage of 2500 V. This configuration is possible as both final stages are driven by the same oscillator; besides it allows the use of commercial ferrite cores and make easier the secondary coils insulation. In the Fig. 5 is shown the connection of the set 73 of total capacitance $C_o$ of capacitors C1, C2, ...C9, for instance, to the H.T. generator 69. Each capacitor has capacitance of 40 $\mu$ F and a maximum working voltage of 3000 V. The parallel connection of nine capacitors allows a total capacitance of 360 $\mu$ F. This configuration, suggested by a not easy availability of commercial components with so high value of capacitance, allows, on the other hand the possibility of varying the total capacitance $C_o$ from 40 to 360 F, by varying the number of capacitors C1, C2...C9 connected in parallel. For this purpose a set of eight copper bare-wires 5 (CC1, CC2, \...CC8), for instance, are used to set the desired value of total capacitance $C_o$. The possibility of easily varying the capacitance value, in the field measurements, makes available, within certain limits, various frequency bands, for instance, those centered on the lower or on the higher frequencies according to the desired depth or resolution. In fact, the frequency band shifts to lower values with the increasing of the capacitance $C_o$ of the set of the employed capacitors, and vice versa. By the same way the insertion, in series with the main electrodes 45 and 46, of a suitable inductor L, through the bare wire CC9, produces a shift and a reinforcement of lower spectral components. The voltage produced by the inverter is rectified by a Graetz bridge 23 in which five diodes are utilized in series for each side, equipped with balancing resistors of the leakage currents. The charge of the capacitors takes place through the resistor R (5 kohm, 100 W), which determines the time required by the charge of the capacitors. The resistor R is so dimensioned that the inverter, at the discharge time, has a load not too low. The resistor R limits the maximum current required to the inverter to 0.5 A. The same resistor protects the diodes also when the voltage at the ends of the capacitors is inverted, for the presence of oscillating phenomena, due to parasitic inductive components.

Two voltmeters $V_1$, $V_2$ are connected to the terminals of the capacitors 73 to read their voltage; V1 is utilized for the range 0-2500 V; V2, for the range 0-300 V, reads the same tension as V1, in the range of values that corresponds to few divisions above V1. A third voltmeter V3 is also used, for safety sake, to control the charge status of each capacitor through a resistor network.

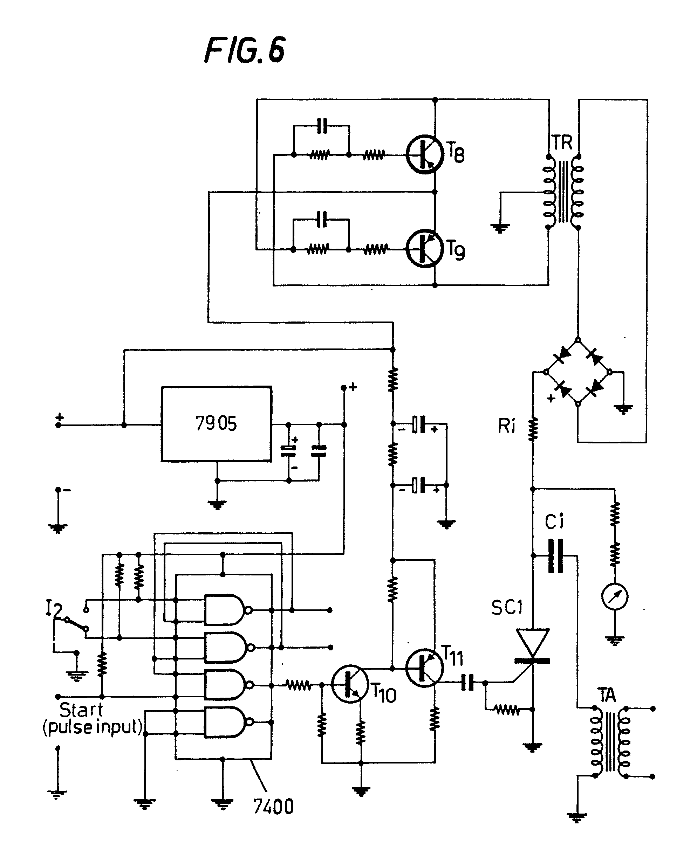

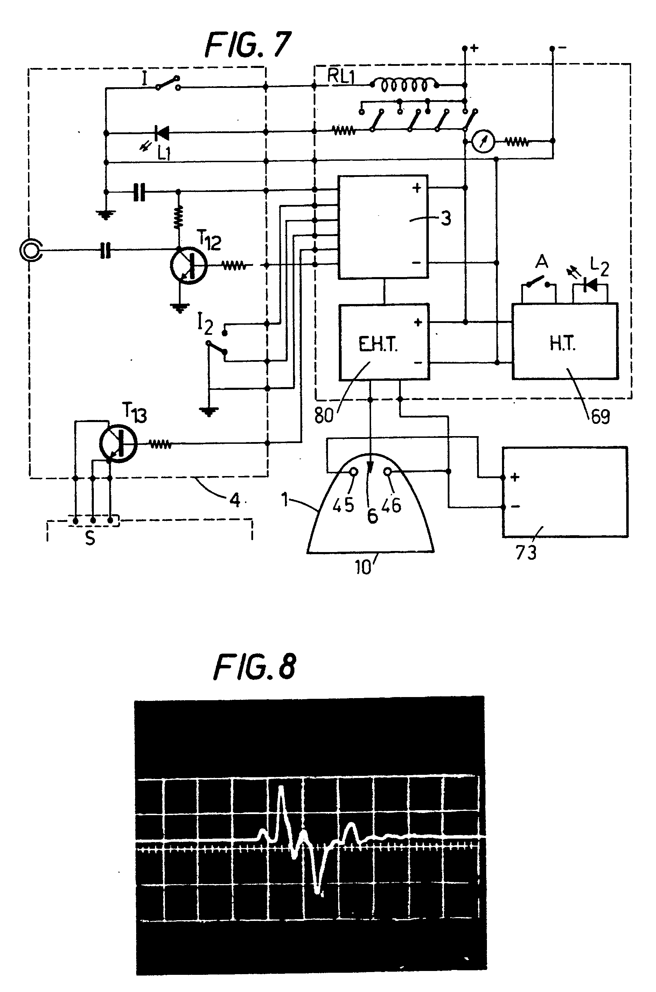

The Fig. 6 shows block 80 of the E.H.T. generator 80 and the block of the trigger circuits. Also those circuits are supplied by 12 V D.C., for the same reasons above mentioned. A very simple inverter, with a self oscillating configuration (T10, T11), is used to generate a voltage of about 400 V, which charges the capacitor C1 through a bridge rectifier and the resistor Ri. C1 is connected to the primary coil of the ferrite-transformer TA, with coils in oil-bath and transformation ratio 1:400. A silicon controlled rectifier SC1 is used to switch to the ground the circuit capacitor-primary of the TA. When it happens, the capacitor C1 discharges very quickly and the electric pulse on the primary of the transformer TA produces on the secondary coil a peak of voltage of about 150 kV, which is sent to the trigger electrode of the source 1 for firing the spark. The integrated circuit 7400 (Fig. 6) with a couple of transistors T3 and T4 (Fig. 4) make up the control logic for the SC1 gate and generate also two synchronization impulses for the seismograph δ and for another external control instrument (usually an oscilloscope). The triggering pulse for the E.H.T. system 80 is sent to the START input either manually, by means of the push-button T2, or automatically, by means of an external apparatus, which can be a microcomputer system. All the logic signals on input and output are TTL standard. In the Fig. 7 is shown the interconnection of the circuits above described. The block 3 represents the synchronism signal generator, the charge system of the capacitors 73. δ represents the seismograph. The control console 4 is put on a panel near to the seismograph δ . The switch 12 drives the antibounce circuit, which produces the trigger pulse for the E.H.T. generator of block 80.

The 12 V power supply circuit is switched on and off by the relay RL1, driven by the switch I. The power-on of the system is indicated by the LED L1. In the control panel there are also two buffers T12 and T13 for the seismograph and oscilloscope synchronism pulses. The seismograph δ is interfaced according to the open collector techniques, as required by its manufacturer.

The switch A allows to start or stop the H.T. driving oscillator 69; the presence of the H.T. source 69 is signaled by the LED L2. In such a way it is possible to produce the H.T. voltage for the capacitors charge, by switching only low voltage signals. This is very useful because often it is suitable to test the apparatus, only as far as concerns the output of the auxiliary spark and synchronism signals, without firing the high energy discharge, which, as desired, can be subsequently activated.

Preliminary measurements were carried out in the air, with empty paraboloidic chamber, in order to characterize the transducer device 1. In laboratory an equipment was used consisting of a 1/4 inch B & K microphone, capable to measure sound pressure levels up to 180dB; an amplifier and a tektronix storage oscilloscope provided with a Polaroid camera. The acoustic-field measurements was made by evaluating the amplitude of the first half-cycle of the pulse read on the oscilloscope (Fig. 8), for some different planes at right angles to the axis of symmetry Z-Z of the paraboloidic reflective surface and distant from the base z = 0, z = 30 cm, z = 100 cm, z = 220 cm respectively. The acoustic-field diagrams are shown in Fig. 9. The experimental accuracy is about a few units percent both for the acoustic pressure and for the distance values. In the first two diagrams corresponding to z = 0 and z = 30 cm, acoustic pressure oscillations typical of the near field are noticed, on the contrary, in the other diagrams relative to z = 100 cm and z = 220 cm it is evident the characteristic behaviour of the far field. The width of the main beam is $2\alpha = 28°$ ; it was determined graphically, evaluating the x abscissa value corresponding to the a - 6dB value from the maximum of the acoustic pressure at the distance z = 220 cm, by means of the relation : $\alpha = \text{arctg } x/z$. The amplitude spectrum of the acoustic pulse given in Fig. 8, is shown in the frequency range 0-25kHz in Fig. 10. It was processed by means of a PDP 11/34A computer provided with a 12 bit-A/D Converter and a VT55E graphic terminal with "hard copy" the signal acquisition at a sampling frequency of 55kHz, was carried out on rigid disc (10 Mbyte) which allows to semplify greatly the pulse capture because it can store signals with time duration of the order of minute. The useful samples, corresponding to the acoustic pulse, were insulated within a 1024 sample "window", by means of a suitable software program. At last, the amplitude spectrum was determined using a FFT algorithm.

Fig. 10bis is a further laboratory test showing an important feature of the electroacoustic source 1 giving the possibility of modifying the frequency spectrum of the acoustic pulse by a suitable variation of electrical circuit-parameters like capacitance.

More particularly Fig. 10bis is a comparison between the power-spectrum of the acoustic pulse in air for a capacitance value $C_o$ = 40 $\mu$ F (a) and that for $C_o$ = 360 $\mu$ F (b). Both signals were detected at a distance of 1 m from the paraboloidic chamber base on its symmetry axis Z-Z. It is evident that an increase of capacitance produces a shift of spectrum-components towards lower frequencies. A similar result can be also obtained by putting a suitable inductance in series in the circuit of the main electrodes 45, 46.

The acoustic impulse of the seismic source was detected on the field for different experimental conditions. Figures 11a and 11b show the source signatures for one shot, at a depth of 2 m in weathered soil. Two cases are illustrated corresponding to two different values of capacitance: $C_o$ = 40 $\mu$ F and $C_o$ = 360 $\mu$ F respectively. In the same Figures 11a and 11b, the amplitude frequency spectra of the signals are also given. The pulses were picked up by means of a hydrophone placed beneath the source on the axis Z-Z of the paraboloidic surface, through a proper water-filled hole made almost horizontally into the ground. The signals were recorded on a FM tape recorder and processed in the laboratory by a FFT algorithm.

In Fig. 11a relative to $C_o$ = 40 $\mu$ F, it may be noticed that the source signal has the highest peaks at frequencies between 100 and 350 Hz and also significant frequency components still at about 800 Hz. In the diagrams shown in Fig. 11b ($C_o$ = 360 $\mu$ F); the acoustic impulse exhibits a sharp peak at about 70 Hz and two other pronounced peaks are present around 250 Hz.

However, the contribution to higher frequencies is less evident than in the case shown in Fig. 11a because of an appreciable shift of the frequency components toward the lower frequencies.

As already shown for the laboratory tests it is possible to modify, to a certain extent, the frequency spectrum of the acoustic impulse by a proper variation of the electric circuit-parameters.

First seismogram records were carried out in a site near the town of Tivoli (Rome, Italy) where an approximate knowledge of the subsurface structure was known from the presence of a nearby travertine quarry. An example is given in Figures 12P and 12H where a 100 ms seismogram record, corresponding to two shots of the seismic source (P), is compared with that (H) obtained by striking two blows of 5 kg - sledge hammer or a metallic plate firmly put on the ground. The seismic signals were detected by means of twelve vertical 14 Hz - geophones spacing of 0.8 m along a straight seismic line. The source off-set to the first geophone was 8 m in both cases.

The recording system was a 12-channel digital enhancement seismograph connected to a multichannel digital tape recorder. The same amplifier gains were set both for the hammer source and the seismic wave source 1. Clearly defined events in the 0-70 ms range are evident in the seismogram corresponding to the paraboloidic source (P). They can be interpreted as reflections on a succession of shallow travertine-clay interfaces. The same events are less evident in the hammer seismogram (H). At greater depth the electroacoustic source seems to exhibit a better penetration capacitance in comparison with the sledge hammer.

The electroacoustic wave source, according to this invention, can be utilized as well on land as more profitably in underwater acoustic prospectings, by providing suitable electric insulation means, water proofing and water tight means, according to the art of the field. In this latter application the utilized frequency range is setting toward values higher than those of the land.

## Claims

1. Electroacustic pulse source for high resolution seismic prospectings, comprising
   - an electroacustic transducer (1) including a metal hollow structure (7,8) substantially shaped as a bell having its base closed by an elastic diaphragm (10) and being filled with a dielectric liquid, said metal hollow structure defining an inner parabolic reflective surface having a vertical axis (Z-Z), and two main electrodes (45,46) supported by said metal hollow structure (7,8) and extending into the liquid from the top of said structure (7,8);
   - a set (Co) of capacitors (C1-C9) connected in parallel to each other and to a charging high voltage power supply (H.T.), the armatures of the capacitors being electrically connected to the main electrodes (45,46);
   - a trigger pulse generatore (H.E.T.) adapted to cause a spark being generated across the main electrodes (45,46);
   - a synchronization pulse generator (3) controlling the trigger pulse generator (H.E.T.); and
   - a remote control (4) driving the synchronization pulse generator (3), in order to cause a high voltage electric discharge across the main electrodes (45,46) producing acustic pulses through the dielectric liquid, which are transmitted to the ground on which the base of the transducer (1) is kept adherent, thereby generating a seismic wave;
characterized in that
- said parabolic reflective surface is the surface of a paraboloid of revolution having said vertical axis as its axis and a focal point;
- said main electrodes (45,46) are positioned with their ends adjacent to said focal point and are supported by adjusting means (15,16,65,66) enabling said main electrodes (45,46) to be moved in the direction of said axis and/or perpendicularly thereto;
- said dielectric liquid is a liquid with high electrical resistivity and relatively low dielectric strenght, such as vaseline oil;
- said charging high voltage power supply (H.T.) is adapted to maintain a voltage across the main electrode insufficient for initiating a discharge across the main electrodes (45,46), so long as the dieletric liquid is not ionized;
- said synchronization pulse generator (3) generates electric pulses adapted to drive control instruments, such as a seismograph (S) and an oscilloscope (O) and in that it further comprises an auxiliary electrode (6) positioned with its end in the gap between the two main electrodes (45,46); said trigger pulse generator (H.E.T.) being connected to said auxiliary electrode (6) and one of said main electrodes (46) to apply thereacross a voltage sufficient to ionize the dielectric liquid in said gap when said synchronization pulse generator (3) is driven by said remote control (4) by means of a manually or automatically operated switch (I2).

2. Electroacustic pulse source according to claim 1, characterized in that the set (Co) of capacitors (C1-C9) comprises capacitors (C1-C9) selectively connected in parallel by movable bare-wires (CC1-CC8) in order to obtain a plurality of desired capacitances of the selected set of capacitors.

## Revendications

1. Source d'impulsion électro-acoustique pour prospection sismique de haute résolution, comprenant;
- un transducteur électro-acoustique (1) qui comporte une structure creuse métallique (7, 8) ayant pratiquement la forme d'une cloche dont la base est fermée par un diaphragme élastique (10) et remplie d'un liquide diélectrique, ladite structure creuse métallique déterminant une surface réflectrice parabolique à axe vertical (z-z), et deux électrodes principales (45, 46) portées par ladite structure creuse métallique (7, 8) et qui se prolongent à l'intérieur du liquide à partir du sommet de ladite structure (7, 8) ;
- un ensemble (Co) de condensateurs (C1-C9) disposés en parallèle les uns par rapport aux autres et par rapport à une source d'énergie à haute tension (H.T.), les armatures des condensateurs étant reliées électriquement aux électrodes principales (45, 46) ;
- un générateur d'impulsion de déclenchement (H.E.T.) conçu pour provoquer la production d'une étincelle entre les électrodes principales (45, 46) ;
- un générateur d'impulsion de synchronisation (3) qui commande le générateur d'impulsion de déclenchement (H.E.T.) ; et
- une commande à distance (4) qui entraîne le générateur d'impulsion de synchronisation (3), de façon à provoquer une décharge électrique à haute tension entre les électrodes principales (45, 46) en produisant des impulsions acoustiques à travers le liquide diélectrique, ces impulsions acoustiques étant transmises au sol contre lequel est maintenue la base du transducteur (1), en produisant ainsi une onde sismique ;
caractérisée en ce que
- ladite surface réflectrice parabolique est constituée par la surface d'une paraboloïde de révolution ayant comme axe ledit axe vertical et un foyer ;
- lesdites électrodes principales (45, 46) sont mises en position de façon que leurs extrémités soient adjacentes audit foyer et soient portées par un moyen de réglage (15, 16, 65, 66) qui permet de déplacer lesdites électrodes principales (45, 46) dans la direction dudit axe ou dans une direction perpendiculaire à celui-ci ;
- ledit liquide diélectrique est un liquide ayant une forte résistivité électrique et une force diélectrique relativement faible, telle que l'huile de vaseline ;
- ladite source d'énergie de charge à haute tension (H.T.) est conçue pour maintenir entre les électrodes principales une différence de potentiel insuffisante pour déclencher une décharge entre les électrodes principales (45, 46),aussi longtemps que le liquide diélectrique n'est pas ionisé ;

- ledit générateur d'impulsion de synchronisation (3) produit des impulsions électriques conçues pour commander des instruments de contrôle, tels qu'un sismographe (S) et un oscilloscope (O), et en ce qu'il comprend de plus une électrode auxiliaire (6) placée de façon que ses extrémités se trouvent dans l'espace ménagé entre les deux électrodes principales (45, 46); ledit générateur d'impulsion de déclenchement (H.E.T.) étant relié à ladite électrode auxiliaire (6) et à l'une des dites électrodes principales (46) pour appliquer entre elles une différence de potentiel suffisante pour provoquer l'ionisation du liquide diélectrique dans ledit espace lorsque ledit générateur d'impulsion de synchronisation (3) est commandé par ladite commande à distance (4) au moyen d'un interrupteur (12) commandé manuellement ou automatiquement.

2. Source d'impulsion électro-acoustique selon la revendication 1, caractérisée en ce que l'ensemble (Co) de condensateurs (C1-C9) comprend des condensateurs (C1-C9) reliés sélectivement en parallèle au moyen de barettes mobiles (CC1-CC8) de façon à obtenir plusieurs capacitances désirées à partir de l'ensemble de condensateurs choisi.

**Patentansprüche**

1. Elektroakustische Pulsquelle für seismische Untersuchungen mit hoher Auflösung, mit
   - einem elektroakustischen Wandler (1) mit einer hohlen Metallkonstruktion (7,8), die im wesentlichen die Form einer Glocke besitzt, deren Basis durch eine elastische Membran (10) verschlossen ist und die mit einer dielektrischen Flüssigkeit gefüllt ist, wobei die hohle Metallkonstruktion eine parabolische, reflektierende innere Oberfläche mit einer vertikalen Achse (Z-Z) begrenzt, sowie mit zwei von der genannten hohlen Metallkonstruktion (7,8) getragenen Hauptelektroden (45,46), die sich vom oberen Ende der genannten Konstruktion (7,8) in die Flüssigkeit hineinerstrecken;
   - einem Satz (Co) von Kondensatoren (C1-C9), die zueinander und zu einer Lade-Hochspannungsquelle (H. T.) parallelgeschaltet sind, wobei die Beläge der Kondensatoren mit den Hauptelektroden (45,46) elektrisch verbunden sind;
- einem Triggerimpulsgenerator (H.E.T.), durch den ein Funken quer über die Hauptelektroden (45,46) erzeugbar ist;
- einem den Triggerimpulsgenerator (H.E.T.) steuernden Synchronisierimpulsgenerator (3); und
- einer Fernbedienung (4) zur Ansteuerung des Synchronisierimpulsgenerators (3), um eine elektrische Hochspannungsentladung über die Hauptelektroden (45,46) zu bewirken, die akustische Pulse durch die dielektrische Flüssigkeit erzeugt, welche auf den Boden übertragen werden, auf dem die Basis des Wandlers (1) in Haftverbindung gehalten wird, wodurch eine seismische Welle erzeugt wird; dadurch gekennzeichnet, daß
- die genannte parabolische, reflektierende Oberfläche die Oberfläche eines Rotations-Paraboloids ist, das die genannte vertikale Achse als seine Achse und einen Brennpunkt besitzt;
- die genannten Hauptelektroden (45,46) mit ihren Enden dem genannten Brennpunkt benachbart angeordnet sind und von Einstellmitteln (15,16,65,66) getragen werden, die eine Bewegung der genannten Hauptelektroden (45,46) in Richtung der genannten Achse und/oder senkrecht zu dieser ermöglichen;
- die genannte dielektrische Flüssigkeit eine Flüssigkeit mit hohem spezifischen Widerstand und verhältnismäßig geringer dielektrischer Festigkeit, wie Vaselinöl, ist;
- die genannte Lade-Hochspannungsquelle (H.T.) dazu geeignet ist, die Spannung über die Hauptelektrode unausreichend für die Einleitung einer Entladung über die Hauptelektroden (45,46) zu halten, solange die dielektrische Flüssigkeit nicht ionisiert ist;
- der genannte Synchronisierimpulsgenerator (3) elektrische Impulse für die Ansteuerung von Kontrollinstrumenten, wie ein Seismograph (S) und ein Oszilloskop (O), erzeugt, und die elektroakustische Pulsquelle weiters eine Hilfselektrode (6) besitzt, die mit ihrem Ende in dem Spalt zwischen den zwei Hauptelektroden (45,46) angeordnet ist, wobei der genannte Triggerimpulsgenerator (H.E.T.) an die genannte Hilfselektrode (6) und eine (46) der genannten Hauptelektroden angeschlossen ist, um an diese eine Spannung anzulegen, die ausreicht, um die dielektrische Flüssigkeit in dem genannten Spalt zu ionisieren, wenn der genannte Synchronisierimpulsgenerator (3) von der Fernbedienung (4) mittels eines händisch oder automatisch betätigten Schalters (I2) angesteuert wird.

2. Elektroakustische Pulsquelle nach Anspruch 1, dadurch gekennzeichnet, daß der Satz (Co) von Kondensatoren (C1-C9) Kondensatoren (C1-C9) enthält, die durch bewegliche blanke Drähte (CC1-CC8) selektiv parallelschaltbar sind, um aus dem ausgewählten Satz von Kondensatoren mehrere gewünschte Kapazitäten zu erhalten.

FIG.1

FIG.2

FIG.3

FIG.4

# FIG. 5

# *FIG.6*

## FIG. 7

## FIG. 8

FIG.9

FIG.10

FIG.10 bis

(a)

20 mV

(b)

100 mV

800 μs

FIG.11a

mV
100
0
-100
0    50    100    ms

dB
0
-24
-48
0    500    1000    Hz

FIG.11b

mV
300
0
-300
0    100    200    ms

dB
0
-24
-48
0    500    1000    Hz

FIG.12 P

FIG.12 H